# EUROPEAN PATENT SPECIFICATION

(11) **EP 3 347 682 B1**
(45) Date of publication and mention of the grant of the patent: **24.06.2020**
(21) Application number: 16750455.4
(22) Date of filing: 12.08.2016
(51) Int. Cl.: G01F 1/66

(54) **TWO PART REFLECTOR HOLDER FOR AN ULTRASONIC FLOW SENSOR**
ZWEITEILIGER REFLEKTORHALTER FÜR EINEN ULTRASCHALLDURCHFLUSSSENSOR
SUPPORT DE RÉFLECTEUR À DEUX PARTIES POUR CAPTEUR DE DÉBIT À ULTRASONS

(30) Priority: 09.09.2015 DK 201500536
(43) Date of publication of application: 18.07.2018
(73) Proprietor: Danfoss A/S, 6430 Nordborg (DK)
(72) Inventor: LYCK, Henrik Christensen, 6400 Sønderborg (DK); CHRISTENSEN, Torben Amby, 6400 Sønderborg (DK)
(86) International application number: PCT/EP2016/069249
(87) International publication number: WO 2017/041990

(56) References cited:
- EP-A1- 1 978 337
- EP-A1- 2 270 439
- EP-A1- 2 278 281
- EP-A2- 2 410 299
- CN-A- 104 764 499
- CN-U- 202 582 789

## Description

The present invention relates to a reflector arrangement for installation in an ultrasonic flow sensor, the reflector arrangement comprising two holder elements attached to each other, the holder elements together giving the reflector arrangement a basically cylindrical outer shape, the holder elements providing one or more reflector seatings in order to secure one or more reflectors.

EP 2 410 299 A2 and CN 104 764 499 A each discloses a two-part reflector holder for an ultrasonic flow sensor, wherein two reflector holder elements attached to each other form a basically cylindrical outer shape, each holder element providing a reflector seating which is adapted to secure a reflector independently from the other holder element. Other known reflector holder arrangements for installation in an ultrasonic flow sensor are disclosed by EP 2 278 281 A1, EP 2 270 439 A1 and CN 202 582 789 U.

EP 1 978 337 A1 discloses an ultrasonic flow sensor. The ultrasonic flow sensor comprises a reflector arrangement having two reflector seatings.

The reflector seatings are formed by two elongated holder elements which together are adapted to secure the reflector. Thus, none of the holder elements is individually adapted to secure the reflector.

Sometimes, when the reflector shall be placed within the ultrasonic flow sensor in order to perform a flow measurement, reflector arrangements are used which comprise for example two elongated holder elements which are mounted facing each other so that they basically provide a cylindrical reflector arrangement. The reflectors are then mounted in a lumen provided by the two longitudinal elongated holder elements. Each reflector is secured on its reflector seating provided cooperatively by the two longitudinal elongated holder elements. Because of that it may become complicated and time consuming to mount the reflectors in the reflector arrangement as they have to be carefully inserted in the reflector seatings cooperatively provided by the two holder elements.

The object of the invention is to provide a reflector arrangement which allows for easy, reliable and quick mounting of the reflector.

The object of the invention is solved by the reflector arrangement of claim 1.

Having the reflector arrangement as claimed allows an easy, reliable and quick installation of reflectors in the reflector arrangement. If one or more holder elements have the reflector seating which is adapted to secure the reflector the reflector no longer has to be carefully inserted between two holder elements which form the cooperative reflector seating. The holder element is then adapted to secure the reflector, thus independently from other holder elements for example. In other words, a unitary reflector seating is provided by the holder element as a part of the holder element. Each reflector seating is not divided although the reflector arrangement is formed by a plurality of holder elements providing the reflector seatings.

It is preferred that the reflector seating of the holder element is adapted to secure the reflector such as to prevent movement of the reflector in any direction relative to the holder element. Having the reflector mounted on the reflector seating such that any movement relative to the holder element becomes impossible can have the advantage that the reflector cannot get lost, for example when the reflector arrangement is facing a fluid flow. In embodiments, the reflector may be seated in a permanent way or in a non-permanent way. In the first case a very strong fit on the reflector seating is possible while in the second case the reflector may be replaced, for example, when it becomes defective.

In a preferred embodiment of the reflector arrangement the reflector seating is adapted to secure the reflector via one or more fixation elements. Preferably there are two, more preferably three, even more preferably four, more preferably five, most preferably six or more fixation elements present. It is preferred that the fixation elements are arranged at the reflector seating. A large number of fixation elements may provide a very good fit of the reflector on the reflectors seating.

It is preferred that the fixation elements are adapted to engage a circumferential line of the reflector. Thus, a rather large surface of the reflector may be engaged by the fixation elements without, for example, covering a working surface of the reflector. Nonetheless, in embodiments of the invention the fixation elements may extend on the working surface of the reflector in order to provide an even better fixation of the reflector on the reflector seating. It is preferred that the fixation elements are clipping elements so that they impose a force on the working surface of the reflector in order to retain the reflector on the reflector seating.

In a preferred embodiment of the invention the number of fixation elements is even. This allows to provide pairs of mutually opposing fixation elements in order to secure the reflector on the reflector seating. However, in embodiments of the invention the number of fixation elements is uneven, for example three, five, seven or nine fixation elements. Furthermore embodiments with just one fixation element are envisaged, for example, when the fixation element is a fixation rim surrounding the circumferential line of the reflector.

In a preferred embodiment of the invention the fixation element is the fixation rim, the fixation rim being adapted to surround at least partially the circumferential line of the reflector. Preferably the fixation rim is providing a frictional fit for the reflector. This is a convenient way of providing a secure fit of the reflector on the reflector seating. The reflector is firmly secured on the reflector seating without covering the working surface of the reflector. In embodiments the reflector may be in-molded into the fixation rim during a production process of the reflector arrangement which involves molding of the holder element having the reflector seating.

According to the invention, the holder element comprises a base structure from which a seating framework for the reflector seating and an elongated cylindrical outer wall structure of the reflector arrangement extend. The base structure may be a ring structure, for example a ring formed of plastic. Plastic elements may be molded at a low price. It is preferred that the seating framework extends in a direction opposite to the elongated cylindrical outer wall structure from the base structure. Thus, the base structure is interposed between the seating framework and the elongated cylindrical outer wall structure of the reflector arrangement. Preferably, the seating framework has a first length and the elongated cylindrical outer wall structure has a second length. It is preferred that the first length is smaller than the second length. This allows for having a rather short seating framework in comparison to a rather long cylindrical outer wall structure.

It is preferred that the seating framework comprises one or more legs at which the reflector seating is mounted. Preferably, there are four legs per reflector. It is preferred that the reflector seating is mounted at the one or more legs at an angle of between 30° and 60° in comparison to the extension direction of the elongated cylindrical outer wall structure. Most preferably the seating framework mounts the reflector seating at an angle of approximately 45° in comparison to the extension of the elongated cylindrical outer wall structure. In some embodiments the reflector seating may be adjustable in view of a mounting angle towards the elongated cylindrical outer wall structure.

Preferably, the elongated cylindrical outer wall structure extending from the holder element covers an arc less than 360°. Thus, the elongated cylindrical outer wall structure provides a part of a wall of a basically cylindrical reflector arrangement. In examples not forming part of the claimed invention, the elongated cylindrical outer wall covers an arc between 40° and 340°. Preferably the arc is larger than 40°, more preferably larger than 50°, more preferably larger than 80°, more preferably larger than 100°, more preferably larger than 150°, more preferably larger than 180° and most preferably larger than 260°. On the other hand, it is preferred that the elongated cylindrical outer wall structure extending from the holder element covers an arc less than 340°, preferably less than 300°, preferably less than 250°, preferably less than 220°, preferably less than 190°, preferably less than 170°, preferably less than 120°, preferably less than 90°, most preferably less than 60°. According to the invention, the elongated cylindrical outer wall structure extending from the holder element covers an arc of 180°. This may be advantageous for molding processes and assembly processes.

According to the invention the holder element has basically an L-shape in a cross section perpendicular to a direction of an elongation of the holder element. This is achieved by having the cylindrical outer wall structure extending from the holder element covering the arc of 180°. Then, in the cross section perpendicular to the direction of the elongation of the holder element, specifically the elongation of the elongated cylindrical outer wall structure, the holder element has basically the L-shape. The base structure, seen in the cross section, is then arranged perpendicular to the elongated cylindrical outer wall structure. Thus, the impression of the L-shape occurs.

Preferably the reflector arrangement is adapted to house an inner tube. The inner tube is preferably a measurement tube for performing ultrasonic flow measurements. Thus, the reflector arrangement preferably comprises mounting means for holding that inner tube within the lumen delimited by the elongated cylindrical outer wall structure.

It is preferred that the reflector arrangement comprises two or more holder elements, each holder element having the reflector seating which is adapted to secure the reflector independently from the other holder elements. This may have the advantage that none of the reflectors in the reflector arrangement has to be mounted and secured via a cooperation of holder elements. Thus, each reflector may be secured on one individual of each of the holder elements, each holder element not cooperating with any other holder elements in order to secure the reflector on the reflector seating.

According to the invention, the reflector arrangement comprises two holder elements, each of the holder elements having basically the L-shape in the cross section perpendicular to the direction of elongation of elongated cylindrical outer wall structures provided by each of the holder elements, the holder elements being arranged facing each other such that the elongated cylindrical outer wall structures provided by each of the holder elements together form the basically cylindrical reflector arrangement. The two holder elements both provide the elongated cylindrical outer wall structure covering the arc of 180°. Thus, they may be easily connected when facing each other.

It should be understood though that, in examples not forming part of the claimed invention, 360° of an arc of the cylindrical outer wall structure of the reflector arrangement may be arbitrarily distributed between the two holder elements. This means that, for example, one holder element may provide an elongated cylindrical outer wall covering an arc of 90° while the other holder element comprises an elongated cylindrical outer wall structure covering an arc of 270°. It may further be advantageous that the sum of arcs of the elongated cylindrical outer wall structures of the two holder elements sum up to 360°. Thus, independent from how the arcs are distributed between the two elements a complete and closed cylindrical outer wall may be provided in order to form the basically cylindrical reflector arrangement. By that, the lumen for housing the inner tube may be provided.

Furthermore, an exemplary method not forming part of the claimed invention is disclosed, which implements the step of installing the reflector on the reflector seating of the holder element during a molding process of the holder element, the reflector seating being adapted to secure the reflector and the holder element comprising the elongated cylindrical outer wall structure for forming the basically cylindrical outer shape of the reflector arrangement.

Installing the reflector on the reflector seating of the holder element during the molding process of the holder element can be very simple when the reflector seating of the holder element is preferably adapted to secure the reflector such as to prevent movement of the reflector in any direction relative to the holder element. Molding the holder element and securing the reflector on the reflector seating is then performed in the same process step which allows quicker production and can lead to a more reliable fitting of the reflector on the reflector seating.

In the following, the invention is described in view of the attached figures which give exemplarily and non-limiting embodiments of the invention, wherein:
- fig. 1: shows the holder element used in one embodiment of the invention;
- fig. 2: shows an exploded view of an embodiment of the reflector arrangement for installation in an ultrasonic flow sensor according to the invention;
- fig. 3: shows the cross section through the assembled reflector arrangement and depicted in fig. 2; and
- fig. 4: shows a tube assembly for performing ultrasonic flow measurements.

Reference numerals are introduced into the claims and the following detailed description of the invention in order to improve readability of the claims. The reference numerals are in no way meant to be limiting.

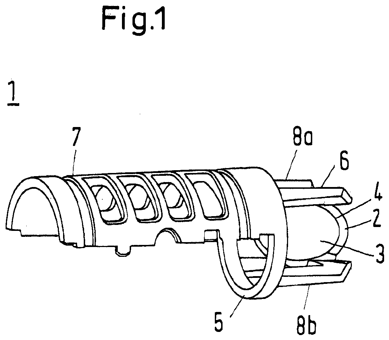

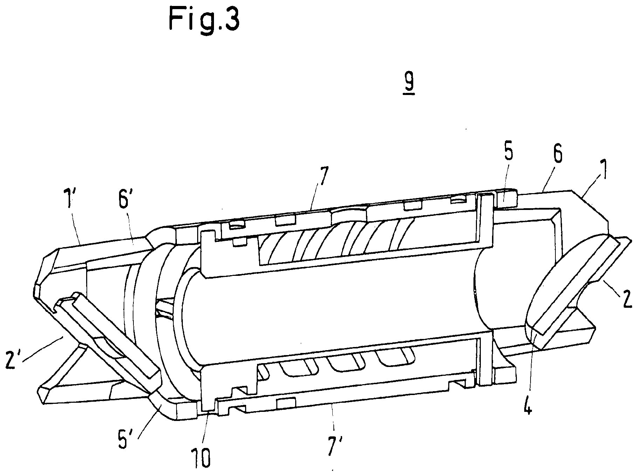

Fig. 1 shows the holder element 1 having the reflector seating 2 which is adapted to secure the reflector 3 during ultrasonic flow measurements. The reflector seating 2 of the holder element 1 is adapted to secure the reflector 3 such as to prevent movement of the reflector 3 in any direction relative to the holder element 1. In the present case this is reached by having the fixation element 4 on the reflector seating 2. As can be seen in more detail in the cross section of fig. 3, the fixation element 4 is the fixation rim, the fixation rim being adapted to surround at least partially the circumferential line of the reflector 3. In this embodiment, the reflector 3 was installed on the reflector seating 2 of the holder element during the molding process of the holder element 1. Thus, it was very simple to install the reflector 3 on the reflector seating 2.

Referring back now to fig. 1 again, it is shown that the holder element 1 comprises the base structure 5 from which the seating framework 6 for the reflector seating 2 and the elongated cylindrical outer wall structure 7 extend. The base structure 5 in this case is the plastic ring. The ring is of annular shape. The ring is interposed between the cylindrical outer wall structure 7 and the seating framework 6. The seating framework 6 comprises four legs 8a, 8b at which the reflector seating 2 is mounted. It is mounted at an angle of 45° in comparison to the direction in which the elongated cylindrical outer wall structure 7 extends. Furthermore it can be seen that the elongated cylindrical outer wall structure 7 extends from the holder element 1 such that it covers the arc of 180° of the base structure 5.

Furthermore fig. 1 discloses that the holder element 1 has basically the L-shape in the cross section perpendicular to the direction of the elongation of the holder element 1. As the elongated cylindrical outer wall structure 7 covers the arc of 180° and the base structure 5 is arranged perpendicular to the outer wall structure 7 the impression of the L-shape occurs. This allows for easy construction of the holder element 1.

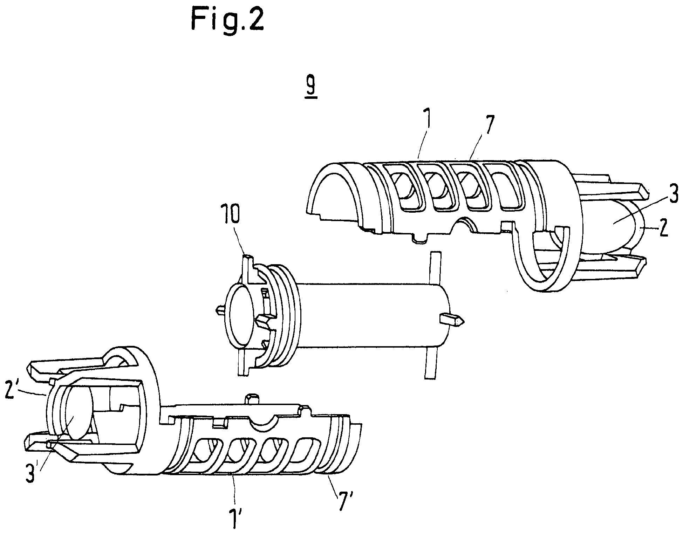

Referring now to fig. 2, it may be seen that the reflector arrangement 9 formed by two holder elements 1, 1' is adapted to house the inner tube 10. Each holder element 1, 1' has the reflector seating 2, 2' which is adapted to secure each reflector 3, 3' independently from the other holder element 1, 1'. In this embodiment each of the holder elements 1, 1' is basically L-shaped in the cross section perpendicular to the direction of the elongation of elongated cylindrical other wall structures 7, 7' provided by each of the holder elements 1, 1', the holder elements 1, 1' being arranged facing each other such that the elongated cylindrical outer wall structures 7, 7' provided by each of the holder elements 1, 1' together form a basically cylindrical reflector arrangement 9. Thus, the elongated cylindrical outer wall structures 7, 7' form a wall of the reflector arrangement 9. Each wall structure 7, 7' covers the arc of 180° in order to cover the total arc of 360°. Within the lumen created by that cylindrical reflector arrangement 9 the inner tube 10 is housed. The inner tube 10 is a measurement tube for ultrasonic flow measurements.

Fig. 3 now shows an assembled view of the reflector arrangement 9 shown in fig. 2. Thus, the reflector arrangement 9 comprises two holder elements 1, 1' attached to each other, the holder elements 1, 1' together giving the reflector arrangement 9 the basically cylindrical outer shape. The reflector arrangement 9 houses the inner tube 10. The reflector seatings 2, 2' are arranged at the angle of 45° in view of the direction in which the cylindrical outer wall structures 7, 7' of the reflector arrangement 9 extend. As can be seen, the fixation element 4, 4' is the fixation rim which is adapted to engage the circumferential line of each reflector 3, 3'. As the reflectors 3, 3' were mounted on the reflector seatings 2, 2' during the molding process of each holder element 1, 1' they are permanently connected to the respective reflector seatings 2, 2' and thus secured such as to prevent movement of each reflector 3 in any direction relative to the respective holder element 1, 1'. Each reflector seating 2, 2' is actually unitary as the holder elements 1, 1' are L-shaped instead of I-shaped in the cross section. Thus, the longitudinal section shown in fig. 3 does not correspond to an actual shape delimitation of the holder elements 1, 1'. The unitary reflector seatings 2, 2' thus actually extend over a cut surface of the given longitudinal section.

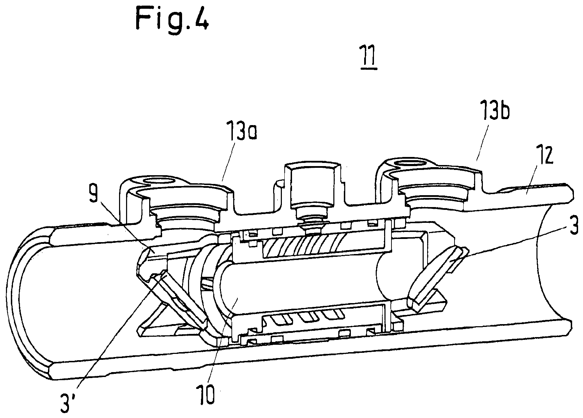

Fig. 4 now shows an installation of the reflector arrangement 9 in the ultrasonic flow sensor 11. The reflector arrangement 9 is arranged in an outer tube 12. The reflector arrangement 9 houses the inner tube 10. Ultrasonic waves may be applied via transducer holes 13a, 13b present in the outer tube 12 for housing transducers (not shown). The ultrasonic waves are reflected by the reflectors 3, 3' and thus a flow measurement as conventionally known may be performed.

As comes clear from the detailed description an advantage of the invention lies in that by having the reflector seating 2 which is adapted to secure the reflector 3 individually on the holder element 1 the reflector 3 may be easily and safely mounted on the reflector arrangement 9. For example, in an exemplary method not forming part of the claimed invention, the reflector 3 may be installed on the reflector seating 2 of the holder element 1 during the molding process of the holder element 1, the reflector seating 2 being adapted to secure the reflector 3 such as to prevent movement of the reflector 3 in any direction relative to the holder element 1 and the holder element 1 comprising the elongated cylindrical outer wall structure 7 for forming the basically cylindrical outer shape of the reflector arrangement 9.

## Claims

1. A reflector arrangement (9) for installation in an ultrasonic flow sensor (11), the reflector arrangement (9) comprising two holder elements (1, 1') attached to each other and having a reflector seating (2, 2') which is adapted to secure a reflector (3, 3') independently from the other holder elements (1, 1'), the holder elements (1, 1') together giving the reflector arrangement (9) a basically cylindrical outer shape, the holder elements (1, 1') providing one or more reflector seatings (2, 2') in order to secure one or more reflectors (3, 3'), wherein the holder elements (1, 1') being arranged facing each other such that the elongated cylindrical outer wall structures (7, 7') provided by each of the holder elements (1, 1') together form a basically cylindrical reflector arrangement (9), wherein each holder element (1, 1') comprises a base structure (5, 5') from which a seating framework (6, 6') for the reflector seating (2, 2') and an elongated cylindrical outer wall structure (7, 7') of the reflector arrangement (9) extend and the base structure (5, 5') is interposed between the cylindrical outer wall structure (7, 7') and the seating framework (6, 6'), **characterized in that** each of the holder elements (1, 1') has basically an L-shape in a cross section perpendicular to a direction of elongation of the elongated cylindrical outer wall structures (7, 7') provided by each of the holder elements (1, 1') and the cylindrical outer wall structure (7, 7') of each of the holder elements (1, 1') covers an arc of 180° of the base structure (5, 5').

2. The reflector arrangement (9) according to claim 1, **characterized in that** the reflector seating (2, 2') of the holder element (1, 1') is adapted to secure the reflector (3, 3') such as to prevent movement of the reflector (3, 3') in any direction relative to the holder element (1, 1').

3. The reflector arrangement (9) according to claims 1 or 2, **characterized in that** the reflector seating (2, 2') is adapted to secure the reflector (3, 3') via one or more fixation elements (4, 4').

4. The reflector arrangement (9) according to claim 3, **characterized in that** the fixation elements (4, 4') are adapted to engage a circumferential line of the reflector (3, 3').

5. The reflector arrangement (9) according to claims 3 or 4, **characterized in that** the number of fixation elements (4, 4') is even.

6. The reflector arrangement (9) according to claim 5, **characterized in that** the reflector seating (2, 2') is adapted to secure the reflector (3, 3') via pairs of mutually opposing fixation elements (4, 4').

7. The reflector arrangement (9) according to claim 4, **characterized in that** the fixation element (4, 4') is a fixation rim, the fixation rim being adapted to surround at least partially a circumferential line of the reflector (3, 3').

8. The reflector arrangement (9) according to any of claims 1 to 7, **characterized in that** the seating framework (6, 6') comprises one or more arcuate frame elements (8, 8') at which the reflector seating (2, 2') is mounted.

9. The reflector arrangement (9) according to any of claims 1 to 8, **characterized in that** the elongated cylindrical outer wall structure (7, 7') extending from the holder element (1, 1') covers an arc less than 360°.

10. The reflector arrangement (9) according to any of the claims 1 to 9, **characterized in that** the reflector arrangement (9) is adapted to house an inner tube (10).

## Patentansprüche

1. Reflektoranordnung (9) zur Installation in einem Ultraschallströmungssensor (11), wobei die Reflektoranordnung (9) zwei Halterelemente (1, 1') umfasst, die aneinander befestigt sind und einen Reflektorsitz (2, 2') aufweisen, der dazu eingerichtet ist, einen Reflektor (3, 3') unabhängig von den anderen Halterelementen (1, 1') zu fixieren, wobei die Halterelemente (1, 1') der Reflektoranordnung (9) zusammen eine im Wesentlichen zylindrische Außenform geben, wobei die Halterelemente (1, 1') einen oder mehrere Reflektorsitze (2, 2') vorsehen, um einen oder mehrere Reflektoren (3, 3') zu fixieren, wobei die Halterelemente (1, 1') einander zugewandt angeordnet sind, sodass die länglichen, zylindrischen Außenwandstrukturen (7, 7'), die durch jedes der Halterelemente (1, 1') vorgesehen sind, zusammen eine im Wesentlichen zylindrische Reflektoranordnung (9) ausbilden, wobei jedes Halterelement (1, 1') eine Basisstruktur (5, 5') umfasst, von der sich ein Sitzrahmen (6, 6') für den Reflektorsitz (2, 2') und eine längliche, zylindrische Außenwandstruktur (7, 7') der Reflektoranordnung (9) erstrecken, und wobei die Basisstruktur (5, 5') zwischen der zylindrischen Außenwandstruktur (7, 7') und dem Sitzrahmen (6, 6') angeordnet ist, **dadurch gekennzeichnet, dass** jedes der Halterelemente (1, 1') im Wesentlichen einen L-förmigen Querschnitt senkrecht zu einer Längsrichtung der länglichen, zylindrischen Außenwandstrukturen (7, 7'), die durch jedes der Halterelemente (1, 1') vorgesehen sind, aufweist, und die zylindrische Außenwandstruktur (7, 7') jedes der Halterelemente (1, 1') einen Bogen von 180° der Basisstruktur (5, 5') abdeckt.

2. Reflektoranordnung (9) nach Anspruch 1, **dadurch gekennzeichnet, dass** der Reflektorsitz (2, 2') des Halterelements (1, 1') dazu eingerichtet ist, den Reflektor (3, 3') derart zu fixieren, dass die Bewegung des Reflektors (3, 3') in eine beliebige Richtung in Bezug zum Halterelement (1, 1') verhindert wird.

3. Reflektoranordnung (9) nach Anspruch 1 oder 2, **dadurch gekennzeichnet, dass** der Reflektorsitz (2, 2') dazu eingerichtet ist, den Reflektor (3, 3') mittels eines oder mehrerer Befestigungselemente (4, 4') zu fixieren.

4. Reflektoranordnung (9) nach Anspruch 3, **dadurch gekennzeichnet, dass** die Befestigungselements (4, 4') dazu eingerichtet sind, in eine Umfangslinie des Reflektors (3, 3') einzugreifen.

5. Reflektoranordnung (9) nach Anspruch 3 oder 4, **dadurch gekennzeichnet, dass** die Anzahl der Befestigungselemente (4, 4') gerade ist.

6. Reflektoranordnung (9) nach Anspruch 5, **dadurch gekennzeichnet, dass** der Reflektorsitz (2, 2') dazu eingerichtet ist, den Reflektor (3, 3') mittels Paaren einander entgegengesetzter Befestigungselemente (4, 4') zu fixieren.

7. Reflektoranordnung (9) nach Anspruch 4, **dadurch gekennzeichnet, dass** das Befestigungselement (4, 4') ein Befestigungsrand ist, wobei der Befestigungsrand dazu eingerichtet ist, eine Umfangslinie des Reflektors (3, 3') zumindest teilweise zu umgeben.

8. Reflektoranordnung (9) nach einem der Ansprüche 1 bis 7, **dadurch gekennzeichnet, dass** der Sitzrahmen (6, 6') ein oder mehrere bogenförmige Rahmenelemente (8, 8') umfasst, auf welche der Reflektorsitz (2, 2') montiert ist.

9. Reflektoranordnung (9) nach einem der Ansprüche 1 bis 8, **dadurch gekennzeichnet, dass** die längliche, zylindrische Außenwandstruktur (7, 7'), die sich vom Halterelement (1, 1') erstreckt, einen Bogen von weniger als 360° abdeckt.

10. Reflektoranordnung (9) nach einem der Ansprüche 1 bis 9, **dadurch gekennzeichnet, dass** die Reflektoranordnung (9) dazu eingerichtet ist, ein Innenrohr (10) aufzunehmen.

## Revendications

1. Agencement de réflecteur (9) destiné à être installé dans un capteur de débit à ultrasons (11), l'agencement de réflecteur (9) comprenant deux éléments de support (1, 1') fixés l'un à l'autre et ayant un siège de réflecteur (2, 2') qui est conçu pour fixer un réflecteur (3, 3') indépendamment des autres éléments de support (1, 1'), les éléments de support (1, 1') donnant ensemble à l'agencement de réflecteur (9) une forme extérieure essentiellement cylindrique, les éléments de support (1, 1') fournissant au moins un siège de réflecteur (2, 2') afin de fixer au moins un réflecteur (3, 3'), les éléments de support (1, 1') étant disposés en face l'un de l'autre de sorte que les structures de paroi externe cylindriques allongées (7, 7') fournies par chacun des éléments de support (1, 1') forment ensemble un agencement de réflecteur (9) essentiellement cylindrique, chaque élément de support (1, 1') comprenant une structure de base (5, 5') à partir de laquelle s'étendent un cadre de siège (6, 6') pour le siège de réflecteur (2, 2') et une structure de paroi externe cylindrique allongée (7, 7') de l'agencement de réflecteur (9) et la structure de base (5, 5' ) étant interposée entre la structure de paroi externe cylindrique (7, 7') et le cadre de siège (6, 6'), **caractérisé en ce que** chacun des éléments de support (1, 1') a essentiellement une forme de L dans une section transversale perpendiculaire à une direction d'allongement des structures de paroi externe cylindriques allongées (7, 7') fournies par chacun des éléments de support (1, 1') et la structure de paroi externe cylindrique (7, 7') de chacun des éléments de support (1, 1') couvre un arc de 180° de la structure de base (5, 5').

2. Agencement de réflecteur (9) selon la revendication 1, **caractérisé en ce que** le siège de réflecteur (2, 2') de l'élément de support (1, 1') est conçu pour fixer le réflecteur (3, 3') de manière à empêcher le mouvement du réflecteur (3, 3') dans n'importe quelle direction par rapport à l'élément de support (1, 1').

3. Agencement de réflecteur (9) selon la revendication 1 ou 2, **caractérisé en ce que** le siège de réflecteur (2, 2') est conçu pour fixer le réflecteur (3, 3') par l'intermédiaire d'au moins un élément de fixation (4, 4').

4. Agencement de réflecteur (9) selon la revendication 3, **caractérisé en ce que** les éléments de fixation (4, 4') sont conçus pour venir en prise avec une ligne circonférentielle du réflecteur (3, 3').

5. Agencement de réflecteur (9) selon la revendication 3 ou 4, **caractérisé en ce que** le nombre d'éléments de fixation (4, 4') est pair.

6. Agencement de réflecteur (9) selon la revendication 5, **caractérisé en ce que** le siège de réflecteur (2, 2') est conçu pour fixer le réflecteur (3, 3') par l'intermédiaire de paires d'éléments de fixation (4, 4') mutuellement opposés.

7. Agencement de réflecteur (9) selon la revendication 4, **caractérisé en ce que** l'élément de fixation (4, 4') est un bord de fixation, le bord de fixation étant conçu pour entourer au moins partiellement une ligne circonférentielle du réflecteur (3, 3').

8. Agencement de réflecteur (9) selon l'une quelconque des revendications 1 à 7, **caractérisé en ce que** le cadre de siège (6, 6') comprend au moins un élément de cadre arqué (8, 8') sur lequel le siège de réflecteur (2, 2') est monté.

9. Agencement de réflecteur (9) selon l'une quelconque des revendications 1 à 8, **caractérisé en ce que** la structure de paroi externe cylindrique allongée (7, 7') s'étendant à partir de l'élément de support (1, 1') couvre un arc inférieur à 360°.

10. Agencement de réflecteur (9) selon l'une quelconque des revendications 1 à 9, **caractérisé en ce que** l'agencement de réflecteur (9) est conçu pour accueillir un tube interne (10).
